# EUROPÄISCHE PATENTANMELDUNG

(11) **EP 2 629 268 A2**
(43) Veröffentlichungstag der Anmeldung: **21.08.2013**
(21) Anmeldenummer: 13151758.3
(22) Anmeldetag: 18.01.2013
(51) Int. Cl.: G07C 5/00

(54) **Diagnoseverfahren und Diagnosevorrichtung für eine Fahrzeugkomponente eines Fahrzeugs**

(30) Priorität: 20.02.2012 DE 102012202540
(71) Anmelder: ROBERT BOSCH GMBH, 70442 Stuttgart (DE)
(72) Erfinder: Rous, Martin, 74395 Mundelsheim (DE); Knoop, Michael, 71638 Ludwigsburg (DE); Flehmig, Folko, 70192 Stuttgart (DE)

(57) **Zusammenfassung**

Die Erfindung betrifft ein Diagnoseverfahren für eine Fahrzeugkomponente eines Fahrzeugs, wobei während eines Betriebs des Fahrzeugs ein Betriebsparameter der Fahrzeugkomponente erfasst (101) wird und wobei abhängig von dem erfassten Betriebsparameter eine Statusnachricht entsprechend einem Status der Fahrzeugkomponente an einen fahrzeugexternen Server (303, 405) für eine Auswertung der Statusnachricht gesendet (103) wird, wobei eine auf der Auswertung der Statusnachricht basierende Nachricht an eine Empfangseinrichtung (305) gesendet (105) wird.

Die Erfindung betrifft ferner eine entsprechende Diagnosevorrichtung (201, 501), ein entsprechendes Diagnosesystem (301, 401) sowie ein Computerprogramm.

## Beschreibung

Die Erfindung betrifft ein Diagnoseverfahren und eine Diagnosevorrichtung für eine Fahrzeugkomponente eines Fahrzeugs. Die Erfindung betrifft ferner ein Diagnosesystem für eine Fahrzeugkomponente eines Fahrzeugs sowie ein Computerprogramm.

### Stand der Technik

Ein bevorstehender Ausfall von Fahrzeugsystemen eines Kraftfahrzeugs wird in der Regel nicht systematisch erfasst. Einige Systeme werden in größeren Abständen bei Werkstattinspektionen geprüft, andere Systeme überhaupt nicht. Dadurch kann ein bevorstehender Ausfall eines wichtigen Systems häufig nicht früh genug erkannt werden. So können diese dann beispielsweise während des Betriebs des Fahrzeugs ausfallen.

### Offenbarung der Erfindung

Die der Erfindung zugrunde liegende Aufgabe kann daher darin gesehen werden, ein Diagnoseverfahren für eine Fahrzeugkomponente eines Fahrzeugs anzugeben, welches die bekannten Nachteile überwindet, und wobei eine Ausfallwahrscheinlichkeit der Fahrzeugkomponente während eines Fahrzeugbetriebs verringert beziehungsweise vermieden wird.

Die der Erfindung zugrunde liegende Aufgabe kann auch darin gesehen werden, eine entsprechende Diagnosevorrichtung, ein entsprechendes Diagnosesystem und ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Diagnoseverfahren für eine Fahrzeugkomponente eines Fahrzeugs bereitgestellt. Hierbei wird während eines Betriebs des Fahrzeugs ein Betriebsparameter der Fahrzeugkomponente erfasst. Abhängig von dem erfassten Betriebsparameter wird eine Statusnachricht entsprechend einem Status der Fahrzeugkomponente an einen fahrzeugexternen Server für eine Auswertung der Statusnachricht gesendet. Es wird dann eine auf der Auswertung der Statusnachricht basierende Nachricht von dem fahrzeugexternen Server an eine Empfangseinrichtung gesendet.

Gemäß einem weiteren Aspekt wird eine Diagnosevorrichtung für eine Fahrzeugkomponente eines Fahrzeugs bereitgestellt. Die Diagnosevorrichtung umfasst eine Erfassungseinrichtung zum Erfassen eines Betriebsparameters der Fahrzeugkomponente. Ferner umfasst die Diagnosevorrichtung eine Sendeeinrichtung zum Senden einer Statusnachricht entsprechend einem Status der Fahrzeugkomponente an einen fahrzeugexternen Server für eine Auswertung der Statusnachricht, wobei das Senden abhängig von dem erfassten Betriebsparameter durchgeführt wird.

Nach noch einem Aspekt wird ein Diagnosesystem für eine Fahrzeugkomponente eines Fahrzeugs bereitgestellt. Das Diagnosesystem umfasst die vorgenannte Diagnosevorrichtung sowie den fahrzeugexternen Server für eine Auswertung der Statusnachricht und die Empfangseinrichtung.

Nach einem anderen Aspekt wird ein Computerprogramm bereitgestellt, welches Programmcode zur Ausführung des Diagnoseverfahrens für eine Fahrzeugkomponente eines Fahrzeugs umfasst, wenn das Computerprogramm auf einem Computer ausgeführt wird.

Die Erfindung umfasst also insbesondere den Gedanken, Zustandsinformationen, hier insbesondere die Statusnachricht, von der Fahrzeugkomponente, welche beispielsweise von einem Fahrzeugsystem umfasst sein kann, bei der eine Funktionseinschränkung absehbar oder bereits eingetreten ist, über eine geeignete Kommunikation, vorzugsweise drahtlos, an den fahrzeugexternen Server zu senden beziehungsweise zu übertragen, wobei der fahrzeugexterne Server einem Fahrzeughersteller, einem Zulieferer des Fahrzeugsystems beziehungsweise der Fahrzeugkomponente und/oder einer Werkstatt gehören kann. Der Empfänger der Statusnachricht, also insbesondere der Fahrzeughersteller, der Zulieferer des Systems oder die Werkstatt, analysiert die Funktionsstörung, das heißt also, dass der Empfänger insbesondere eine Auswertung der Statusnachricht durchführt, und dann beispielsweise den Fahrer und/oder vorzugsweise den Halter des Fahrzeugs über die bevorstehende Funktionseinschränkung oder den Ausfall und entsprechend notwendige Reparaturmaßnahme informieren und diese beispielsweise vorbereiten kann. Das Informieren des Fahrers und/oder des Halters wird insbesondere mittels des Sendens der Nachricht, welche auf der Auswertung der Statusnachricht basiert, durchgeführt. Dadurch lassen sich in vorteilhafter Weise unerwartete Ausfälle von Fahrzeugkomponenten verringern, so dass dadurch auch in vorteilhafter Weise Ausfälle des Fahrzeugs verringert werden können. Vorzugsweise werden dadurch auch in vorteilhafter Weise die entsprechenden Reparaturabläufe beschleunigt. Eine Planung kann insbesondere in vorteilhafter Weise zumindest teilweise, wenn nicht gar ganz, automatisiert werden.

Eine Reparatur im Sinne der vorliegenden Erfindung umfasst allgemein insbesondere einen Austausch von defekten Teilen der Fahrzeugkomponente, ein Instandsetzen der Fahrzeugkomponente oder ein Komplettaustausch der Fahrzeugkomponente.

Das Erfassen des Betriebsparameters der Fahrzeugkomponente bewirkt insbesondere, dass ein Status der Fahrzeugkomponente erfasst beziehungsweise bestimmt werden kann. Es kann also insbesondere in vorteilhafter Weise eine Aussage darüber getroffen werden, ob eine Funktionseinschränkung der Fahrzeugkomponente besteht oder absehbar ist. Entsprechend kann dann insbesondere die Statusnachricht gebildet werden, welche an den fahrzeugexternen Server gesendet wird, um diese auszuwerten.

Nach einer Ausführungsform kann eine Fahrzeugkomponente beispielsweise eine Fahrzeugkomponente ausgewählt aus der folgenden Gruppe von Fahrzeugkomponenten sein: Antriebssystem, Bremssystem, Lenkungssystem, Beleuchtungssystem, Signalisierungseinrichtungen des Fahrzeugs, Fahrerassistenzsystem, beispielsweise ein elektronisches Stabilitätsprogramm-(ESP)-System, ein adaptives Geschwindigkeitsregelsystem (auf Englisch auch Adaptive Cruise Control, ACC, genannt), ein Dämpfungssystem, ein Videosystem, ein Radarsystem, ein Navigationssystem, ein Fahrwerksystem, ein Kommunikationssystem, ein Motorsystem, ein Getriebesystem und ein Klimasystem.

Nach einer anderen Ausführungsform können auch mehrere Fahrzeugkomponenten vorgesehen sein. Die Fahrzeugkomponenten können gleich oder unterschiedlich gebildet sein. Das heißt also insbesondere, dass gemäß dieser Ausführungsform ein jeweiliger Betriebsparameter der Fahrzeugkomponenten erfasst wird, wobei dann analog zu der Ausführungsform mit einer Fahrzeugkomponente entsprechende Statusnachrichten gebildet werden und an den fahrzeugexternen Server abhängig von dem erfassten Betriebsparameter gesendet werden.

Nach einer Ausführungsform umfasst das Erfassen des Betriebsparameters insbesondere ein Überwachen von Sensoren wie beispielsweise Temperatursensoren, Spannungssensoren, Stromsensoren oder Drucksensoren, welche entsprechende physikalische Größen der Fahrzeugkomponente messen können. Insbesondere kann vorgesehen sein, die Sensoren mittels signalbasierter Überwachungen und/oder modellgestützter Überwachungen zu überwachen. Eine signalbasierte Überwachung kann beispielsweise eine Überwachung eines Messbereichs, eines Gradienten, eines Signalpeaks oder eines fehlerhaft konstanten Signals umfassen. Eine modellgestützte Überwachung kann beispielsweise eine Überwachung einer analytischen Redundanz umfassen.

Gemäß einer Ausführungsform kann der erfasste Betriebsparameter mit einem Soll-Betriebsparameterwert verglichen werden. Eine länger andauernde Abweichung, die mit der Zeit anwächst, also größer wird, lässt insbesondere in vorteilhafter Weise auf einen schleichenden Systemfehler schließen. Das heißt also insbesondere, dass vorgesehen sein kann, dass ein zeitlicher Verlauf des Betriebsparameters erfasst und eine Abweichung des Betriebsparameters von einem Soll-Betriebsparameterwert erfasst werden, wobei die Statusnachricht an den fahrzeugexternen Server abhängig von der Abweichung gesendet wird.

Mit der Formulierung "fahrzeugextern" ist ein Ort beziehungsweise Position au-βerhalb des Fahrzeugs gemeint. Das heißt also insbesondere, dass der fahrzeugexterne Server außerhalb des Fahrzeugs, also extern von diesem, angeordnet ist. Das heißt also insbesondere, dass sich der fahrzeugexterne Server nicht im oder an dem Fahrzeug befindet.

Gemäß einer Ausführungsform wird eine Kommunikation zwischen dem Fahrzeug und dem fahrzeugexternen Server mittels eines drahtlosen Kommunikationsverfahrens durchgeführt. Das heißt also insbesondere, dass die Statusnachricht mittels des drahtlosen Kommunikationsverfahrens an den fahrzeugexternen Server gesendet wird. Ein drahtloses Kommunikationsverfahren kann beispielsweise ein WLAN-Kommunikationsverfahren, ein Mobilfunkkommunikationsverfahren, beispielsweise ein "Long Term Evolution" (LTE)-Mobilfunkkommunikationsverfahren sein. Vorzugsweise kann vorgesehen sein, dass die Statusnachricht mittels einer E-Mail und/oder mittels einer SMS an den fahrzeugexternen Server gesendet wird. Die Kommunikation zwischen dem Fahrzeug und dem fahrzeugexternen Server kann beispielsweise verschlüsselt werden.

Gemäß einer Ausführungsform kann der Betriebsparameter eine Eingriffsintensität eines Stellers der Fahrzeugkomponente umfassen. Vorzugsweise kann vorgesehen sein, dass die Eingriffsintensität über eine Betriebsdauer der Fahrzeugkomponente aufintegriert wird. Dies kann analog auch allgemein für den erfassten Betriebsparameter gelten. Das heißt also insbesondere, dass der erfasste Betriebsparameter über die Betriebsdauer der Fahrzeugkomponente aufintegriert wird. Eine Eingriffsintensität eines Stellers kann beispielsweise einen Druck, insbesondere einen Druckaufbau, eines elektronischen Stabilitätsprogramm-(ESP)-Hydroaggregats sein. Es kann vorzugsweise ein Vergleich mit Auslegungsgrenzen vorgesehen sein, insbesondere mit Auslegungsgrenzen des vorgenannten ESP-Hydroaggregats.

Gemäß einer Ausführungsform kann ein Betriebsparameter auch eine Drehzahl eines Motors, beispielsweise eines Antriebsmotors oder eines Pumpenmotors, umfassen. Vorzugsweise kann ein Betriebsparameter eine Information über eine aktuelle Stelleransteuerung, beispielsweise eine Bestromung eines oder mehrerer Ventile eines ESP, umfassen.

Ein Betriebsparameter im Sinne der vorliegenden Erfindung bezeichnet insbesondere einen Parameter, welcher einer physikalischen Größe der Fahrzeugkomponente beschreibt beziehungsweise einem physikalischen Zustand der Fahrzeugkomponente entspricht.

Gemäß einer Ausführungsform kann vorgesehen sein, dass die Statusnachricht bereits während des Betriebs des Fahrzeugs gesendet wird. Insbesondere kann vorgesehen sein, dass die Statusnachricht zeitlich unmittelbar nach dem Bilden der Statusnachricht an den fahrzeugexternen Server gesendet wird. Das heißt also insbesondere, dass noch während des Betriebs des Fahrzeugs der Hersteller, der Zulieferer und/oder die Werkstatt Kenntnis über eine bevorstehende Funktionseinschränkung oder die Funktionseinschränkung erlangen können, so dass geeignete Maßnahmen, insbesondere Reparaturmaßnahme beziehungsweise Reparaturvorbereitungen, zeitnah getroffen werden können.

Gemäß einer weiteren Ausführungsform wird eine Nutzerautorisierungseingabe erfasst, wobei abhängig von der erfassten Nutzerautorisierungseingabe die Statusnachricht an den fahrzeugexternen Server gesendet wird. Das heißt also insbesondere, dass die Statusnachricht nur dann an den fahrzeugexternen Server gesendet wird, wenn der Nutzer sein Einverständnis für die Übermittlung der Statusnachricht gegeben hat. Dieses Einverständnis kann beispielsweise einmalig gegeben werden, so dass anschließend nicht mehr für jedes Senden erneut nach dem Einverständnis des Nutzers gefragt werden muss. Es kann aber auch vorgesehen sein, dass vor jedem Senden einer Statusnachricht der Nutzer gefragt wird, ob er diesem Senden zustimmt.

In einer weiteren Ausführungsform kann vorgesehen sein, dass der Fahrer des Fahrzeugs über die Versendung der Statusnachricht informiert wird.

In einer anderen Ausführungsform kann vorgesehen sein, dass der Betriebsparameter und die Statusnachricht an eine zentrale Kommunikationseinrichtung des Fahrzeugs übermittelt werden, wobei die zentrale Kommunikationseinrichtung den Betriebsparameter und/oder die Statusnachricht an den fahrzeugexternen Server senden kann. Das heißt also insbesondere, dass eine zentrale Kommunikationseinrichtung in dem Fahrzeug vorgesehen sein kann, welche das Senden der Statusnachricht respektive des Betriebsparameters an den fahrzeugexternen Server durchführt. Dadurch muss nicht jede Fahrzeugkomponente selber ein entsprechendes Kommunikationssystem aufweisen. Es reicht hier in vorteilhafter Weise ein einziges Kommunikationssystem, hier die zentrale Kommunikationseinrichtung, welche sämtliche Kommunikation zwischen dem Fahrzeug und dem fahrzeugexternen Server übernimmt.

Nach einer weiteren Ausführungsform kann vorgesehen sein, dass ein jeweiliger Betriebsparameter von weiteren unterschiedlichen Fahrzeugkomponenten erfasst wird, wobei abhängig von den erfassten Betriebsparametern jeweils eine Substatusnachricht entsprechend dem jeweiligen Status der weiteren Fahrzeugkomponenten an eine zentrale fahrzeuginterne Diagnoseeinrichtung übermittelt wird, welche abhängig von den übermittelten Substatusnachrichten die Statusnachricht an den fahrzeugexternen Server sendet. Das heißt also insbesondere, dass die einzelnen Fahrzeugkomponenten ihren jeweiligen Zustand, also ihren Status, im Kontext von mehreren Fahrzeugkomponenten auch als Substatus bezeichnet, an die zentrale Diagnoseeinrichtung übermitteln, welche daraufhin in vorteilhafter Weise einen Status entsprechend dem Gesamtzustand entsprechend den mehreren Fahrzeugkomponenten bilden kann, so dass diese dann an den fahrzeugexternen Server gesandt werden kann. Dadurch kann in vorteilhafter Weise der Empfänger der Statusnachricht einen Überblick über einen Gesamtzustand des Fahrzeugs mit seinen einzelnen Systemen umfassend die mehreren Fahrzeugkomponenten erhalten. Eine noch umfassendere und genauere Fehleranalyse ist somit in vorteilhafter Weise ermöglicht.

Gemäß einer weiteren Ausführungsform kann vorgesehen sein, dass die Empfangseinrichtung von einer Reparaturanlage umfasst ist, welche abhängig von der Nachricht und abhängig von einer erfassten weiteren Nutzerautorisierungseingabe zu einem vorbestimmten Zeitpunkt in einen Reparaturmodus für eine Reparatur der Fahrzeugkomponente gefahren wird. Das heißt also insbesondere, dass der Nutzer, beispielsweise der Fahrer, einer Reparatur der Fahrzeugkomponente zustimmen kann, er gibt also sein diesbezügliches Einverständnis, er autorisiert insofern die Reparatur. Entsprechend kann die Reparaturanlage vorbereitet werden, wobei dieses Vorbereiten insbesondere in Abhängigkeit von der Nachricht durchgeführt wird. Da die Nachricht auf der Auswertung der Statusnachricht basiert, ist somit in vorteilhafter Weise eine Kenntnis darüber erlangt, welche Reparaturmaßnahmen durchgeführt werden müssen, so dass entsprechend die Reparaturanlage in den Reparaturmodus gefahren werden kann. Beispielsweise kann vorgesehen sein, dass die Reparaturanlage für andere Fahrzeuge gesperrt wird beziehungsweise für das eine Fahrzeug reserviert wird. Eine Reparaturanlage kann beispielsweise eine Hebebühne und/oder eine Abgasprüfanlage umfassen.

Gemäß einer anderen Ausführungsform kann vorgesehen sein, dass die Erfassungseinrichtung in einer Steuerung der Fahrzeugkomponente integriert ist.

In einer anderen Ausführungsform kann vorgesehen sein, dass eine zentrale Diagnoseeinrichtung vorgesehen ist, welche mit der Erfassungseinrichtung mittels eines Busses verbunden ist. Bei einem solchen Bus kann es sich beispielsweise um einen Feldbus handeln. Insbesondere handelt es sich bei einem Bus um einen CAN-Bus. Hierbei steht die Formulierung "CAN" für die englischsprachigen Begriffe "Controller Area Network". Das heißt also insbesondere, dass mittels des Busses eine Vernetzung der Steuergeräte der Fahrzeugkomponenten in vorteilhafter Weise ermöglicht ist.

Im Sinne der vorliegenden Erfindung bezeichnet die Formulierung "fahrzeugintern" einen Ort beziehungsweise eine Position an oder innerhalb des Fahrzeugs. Das heißt also insbesondere, dass eine fahrzeuginterne Diagnoseeinrichtung respektive eine fahrzeuginterne Kommunikationseinrichtung sich in dem Fahrzeug oder an dem Fahrzeug befindet.

Die Formulierung "zentral" im Sinne der vorliegenden Erfindung bezeichnet insbesondere, dass die entsprechende Vorrichtung, Einrichtung oder System als übergeordnete Instanz für die entsprechenden Funktionalitäten dient. Das heißt also beispielsweise, dass ein zentrales Steuergerät beziehungsweise eine zentrale Steuerung mit weiteren Steuerungen verbunden beziehungsweise vernetzt ist und diese in vorteilhafter Weise steuert und/oder von diesen in vorteilhafter Weise Informationen erhält. Eine zentrale Kommunikationseinrichtung übernimmt also insbesondere in vorteilhafter Weise als übergeordnete Instanz die Kommunikation zwischen dem Fahrzeug und dem fahrzeugexternen Server beziehungsweise weiteren fahrzeugexternen Servern. Eine zentrale Diagnoseeinrichtung übernimmt also in vorteilhafter Weise als übergeordnete Instanz eine Diagnose des Gesamtsystems umfassend die mehreren Fahrzeugkomponenten.

Nach einer weiteren Ausführungsform kann vorgesehen sein, dass die zentrale Diagnoseeinrichtung in einer zentralen Kommunikationseinrichtung umfassend die Sendeeinrichtung integriert ist.

Nach einer weiteren Ausführungsform kann vorgesehen sein, dass die Empfangseinrichtung von einer Reparaturanlage umfasst ist.

Nach einer weiteren Ausführungsform kann vorgesehen sein, dass in dem Fahrzeug zusätzlich der entsprechende Betriebsparameter an den fahrzeugexternen Server gesendet wird.

In einer weiteren Ausführungsform kann vorgesehen sein, dass die Empfangseinrichtung in dem Fahrzeug oder an dem Fahrzeug angeordnet ist. In einer weiteren Ausführungsform kann vorgesehen sein, dass die Empfangseinrichtung von einem Mobilfunktelefon umfasst ist. Die Empfangseinrichtung kann beispielsweise auch ein E-Mail-Server oder ein SMS-Server sein. Vorzugsweise kann die Statusnachricht auch an mehrere Empfangseinrichtungen, welche insbesondere gleich oder unterschiedlich gebildet sein können, gesendet werden.

Die Erfindung wird im Folgenden anhand von bevorzugten Ausführungsbeispielen näher erläutert. Hierbei zeigen
- Fig. 1: ein Ablaufdiagramm eines Diagnoseverfahrens,
- Fig. 2: eine Diagnosevorrichtung,
- Fig. 3: ein Diagnosesystem,
- Fig. 4: ein weiteres Diagnosesystem und
- Fig. 5: eine weitere Diagnosevorrichtung.

Im Folgenden werden für gleiche Merkmale gleiche Bezugszeichen verwendet.

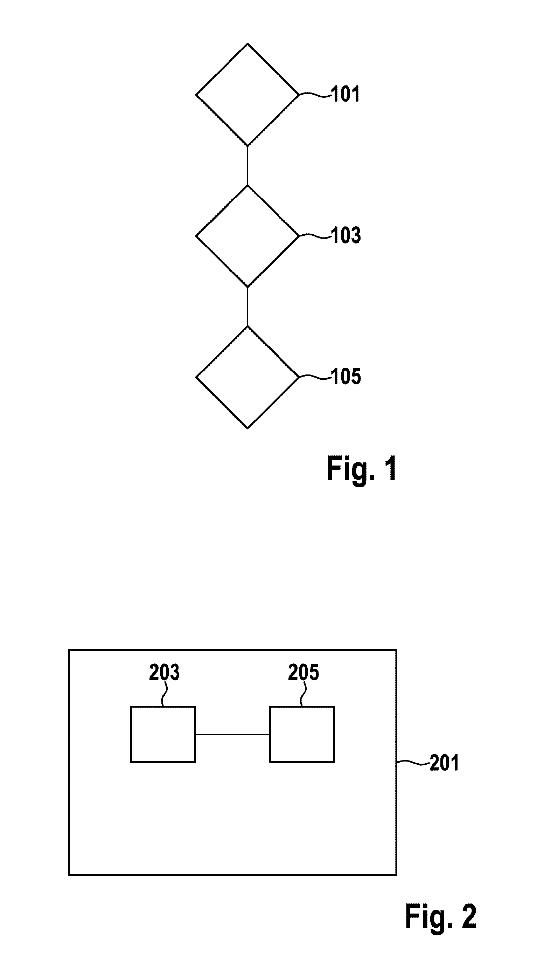

Fig. 1 zeigt ein Ablaufdiagramm eines Diagnoseverfahrens für eine Fahrzeugkomponente eines Fahrzeugs.

Gemäß einem Schritt 101 wird während eines Betriebs des Fahrzeugs ein Betriebsparameter der Fahrzeugkomponente erfasst. Abhängig von dem erfassten Betriebsparameter wird gemäß einem Schritt 103 eine Statusnachricht entsprechend einem Status der Fahrzeugkomponente an einen fahrzeugexternen Server für eine Auswertung der Statusnachricht gesendet. In einem Schritt 105 wird eine auf der Auswertung der Statusnachricht basierende Nachricht an eine Empfangseinrichtung gesendet.

Fig. 2 zeigt eine Diagnosevorrichtung 201 für eine Fahrzeugkomponente (nicht gezeigt) eines Fahrzeugs (nicht gezeigt).

Die Diagnosevorrichtung 201 umfasst eine Erfassungseinrichtung 203 zum Erfassen eines Betriebsparameters der Fahrzeugkomponente. Ferner umfasst die Diagnosevorrichtung 201 eine Sendeeinrichtung 205 zum Senden einer Statusnachricht entsprechend einem Status der Fahrzeugkomponente an einen fahrzeugexternen Server (hier nicht gezeigt) für eine Auswertung der Statusnachricht, wobei das Senden der Statusnachricht abhängig von dem erfassten Betriebsparameter durchgeführt wird.

Gemäß einer nicht gezeigten Ausführungsform kann vorgesehen sein, dass die Erfassungseinrichtung in einer Steuerung der Fahrzeugkomponente integriert ist. In einer weiteren nicht gezeigten Ausführungsform kann eine zentrale Kommunikationseinrichtung vorgesehen sein, in welcher die Sendeeinrichtung integriert ist. Die zentrale Kommunikationseinrichtung ist vorzugsweise ausgebildet, in einem Fahrzeug oder an einem Fahrzeug angeordnet zu werden. In einem solchen Fall kann dann die zentrale Kommunikationseinrichtung als eine zentrale fahrzeuginterne Kommunikationseinrichtung bezeichnet werden.

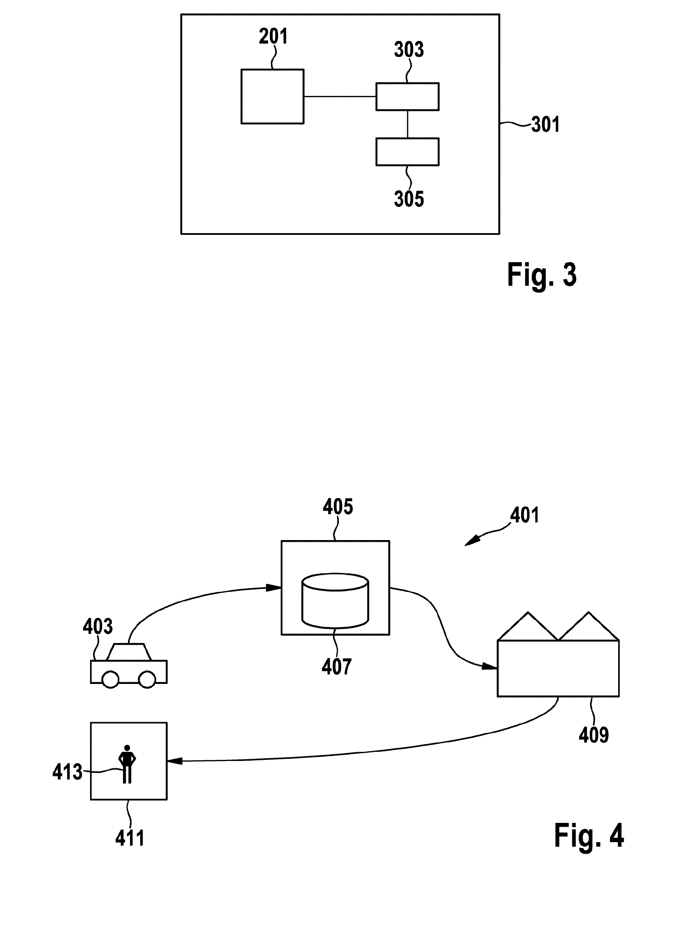

Fig. 3 zeigt ein Diagnosesystem 301 für eine Fahrzeugkomponente eines Fahrzeugs.

Das Diagnosesystem 301 umfasst die Diagnosevorrichtung 201 gemäß Fig. 2. Ferner umfasst das Diagnosesystem 301 einen Server 303, welcher extern von dem Fahrzeug angeordnet ist. Insofern kann der Server 303 als ein fahrzeugexterner Server bezeichnet werden. Der fahrzeugexterne Server 303 ist insbesondere dafür ausgebildet, die Statusnachricht auszuwerten, welche von der Diagnosevorrichtung 201 an den fahrzeugexternen Server 303 gesendet wird. Des Weiteren umfasst das Diagnosesystem 301 eine Empfangseinrichtung 305, welche ausgebildet ist, eine auf der Auswertung der Statusnachricht basierende Nachricht zu empfangen. Hierbei kann beispielsweise vorgesehen sein, dass die auf der Auswertung der Statusnachricht basierende Nachricht von dem fahrzeugexternen Server 303 an die Empfangseinrichtung 305 gesendet wird.

In einer nicht gezeigten Ausführungsform kann die Empfangseinrichtung 305 in dem Fahrzeug, insbesondere in der Diagnosevorrichtung 201, integriert beziehungsweise angeordnet sein. Das heißt also insbesondere, dass der Fahrer in vorteilhafter Weise in Kenntnis darüber gesetzt werden kann, dass die Fahrzeugkomponente eine Funktionseinschränkung aufweist beziehungsweise dass eine solche unmittelbar bevorsteht. In einer weiteren nicht gezeigten Ausführungsform kann vorgesehen sein, dass die Empfangseinrichtung 305 in einem Mobilfunktelefon angeordnet ist. So kann dann beispielsweise in vorteilhafter Weise eine SMS und/oder eine E-Mail an den Besitzer des Mobilfunktelefons geschickt werden. In der Regel handelt es sich dann um das Mobilfunktelefon des Fahrers beziehungsweise Halters. In einer weiteren nicht gezeigten Ausführungsform kann die Empfangseinrichtung 305 auch in einem weiteren fahrzeugexternen Server integriert sein. Der weitere fahrzeugexterne Server kann beispielsweise einer Werkstatt gehören, so dass diese entsprechend beispielsweise in vorteilhafter Weise eine Reparaturanlage für eine Reparatur der Fahrzeugkomponente vorbereiten kann. In einer anderen nicht gezeigten Ausführungsform können mehrere Empfangseinrichtungen vorgesehen sein, welche gleich oder unterschiedlich gebildet sind. So kann beispielsweise zum einen der Halter beziehungsweise der Fahrer über die Funktionseinschränkung der Fahrzeugkomponente informiert werden. Zum anderen ist somit gleichzeitig in vorteilhafter Weise eine Informationsübermittlung bezüglich des Funktionsausfalls beziehungsweise Funktionseinschränkung der Fahrzeugkomponente an eine Werkstatt ermöglicht.

Fig. 4 zeigt ein weiteres Diagnosesystem 401 für eine Fahrzeugkomponente eines Fahrzeugs 403.

In dem Fahrzeug 403 ist eine in Fig. 4 nicht dargestellte Diagnosevorrichtung angeordnet. Diese überwacht insbesondere eine oder mehrere Fahrzeugkomponenten des Fahrzeugs 403 auf eine mögliche Funktionseinschränkung beziehungsweise auf einen Funktionsausfall. Sofern eine solche Funktionseinschränkung absehbar oder bereits eingetreten ist, wird von dem Fahrzeug 403 an einen fahrzeugexternen Server 405 eine entsprechende Statusnachricht gesendet.

Der fahrzeugexterne Server 405 umfasst beispielsweise eine Reparaturdatenbank 407. Die Reparaturdatenbank 407 umfasst insbesondere reparaturrelevante Daten. Das heißt also insbesondere, dass die Daten, welche in der Reparaturdatenbank 407 gespeichert sind, relevant für eine Reparatur der Fahrzeugkomponente des Fahrzeugs 403 sind. Die Statusnachricht wird von dem fahrzeugexternen Server 405 ausgewertet und basierend auf den Reparaturdaten der Reparaturdatenbank 407 eine Nachricht gebildet, welche beispielsweise eine Maßnahmenempfehlung für eine Werkstatt 409 umfassen kann. Hierfür weist die Werkstatt 409 eine in Fig. 4 nicht gezeigte Empfangseinrichtung zum Empfangen der Nachricht des fahrzeugexternen Servers 405 auf.

Die Werkstatt 409 kann dann basierend auf den Maßnahmenempfehlungen einen entsprechenden Reparaturvorschlag vorbereiten und diesen an eine weitere Empfangseinrichtung 411 senden. In Fig. 4 weist die weitere Empfangseinrichtung 411 ein Piktogramm 413 auf, welches eine menschliche Kontur aufweist. Damit soll exemplarisch gekennzeichnet werden, dass die weitere Empfangseinrichtung 411 beispielsweise in einem Mobilfunktelefon des Fahrzeughalters des Fahrzeugs 403 angeordnet sein kann. Das heißt also insbesondere, dass die Werkstatt 409 dem Fahrer einen Reparaturvorschlag mittels einer SMS schicken kann. Zusätzlich oder anstelle einer SMS kann auch eine E-Mail vorgesehen sein.

Der fahrzeugexterne Server 405 mit der Reparaturdatenbank 407 kann beispielsweise einem Fahrzeughersteller oder einem Zulieferer gehören.

In einer nicht gezeigten Ausführungsform können mögliche Maßnahmen seitens des Fahrzeugherstellers, des Zulieferers oder der Werkstatt 409 folgende Maßnahmen sein:
Der Fahrer bzw. Halter wird nach einer Analyse der übertragenen Daten zum Beispiel per E-Mail oder SMS informiert, dass eine Funktionseinschränkung bevorsteht.
Bei nur noch geringer prognostizierter Restlaufzeit eines wichtigen Systems wird vorzugsweise dem Fahrer die Fahrt zur nächstgelegenen Werkstatt empfohlen. Dem Fahrer wird beispielsweise angeboten, über das Navigationsgerät die Route zu dieser Werkstatt zu ermitteln.

Der Fahrzeughersteller und/oder Zulieferer gibt beispielsweise der Werkstatt nach Analyse der übertragenen Daten eine Empfehlung zur Ausführung der Reparatur, beispielsweise per automatisch generierter E-Mail basierend auf einer Reparaturdatenbank.

Dem Halter des Fahrzeugs wird vorzugsweise ein Reparaturvorschlag unterbreitet, der insbesondere zumindest eine der folgenden Informationen umfasst:
- Grund der Reparatur,
- auszuwechselnde Teile,
- auszuführende Arbeiten,
- Kostenvoranschlag,
- Terminvorschlag.

Der Wartungsvorschlag kann beispielsweise aus einer Reparaturdatenbank automatisch generiert und insbesondere per E-Mail und/oder vorzugsweise zusätzlich bei hoher Dringlichkeit mit reduziertem Inhalt per SMS versendet werden.

Alternativ oder zusätzlich kann der Reparaturvorschlag vorzugsweise auch mit Passwortschutz in eine Serviceseite der Werkstatt im Internet eingestellt werden, so dass der Halter sie von dort in vorteilhafter Weise abrufen kann.

Sobald der Halter den Wartungsvorschlag akzeptiert, beispielsweise per SMS, E-Mail oder anklicken eines Bestätigungsknopfs auf der Serviceseite im Internet, reserviert die Werkstatt vorzugsweise automatisch die benötigten Ressourcen (Personal, Arbeitsplatz mit Hebebühne,...) und bestellt insbesondere die erforderlichen Ersatzteile.

Die (zu erwartende) Funktionseinschränkung wird vom Fahrzeughersteller und seinen Zulieferern insbesondere in vorteilhafter Weise zur "Supply-Chain"-Optimierung (Lagerhaltung, Produktion, Einkauf,...) verwendet.

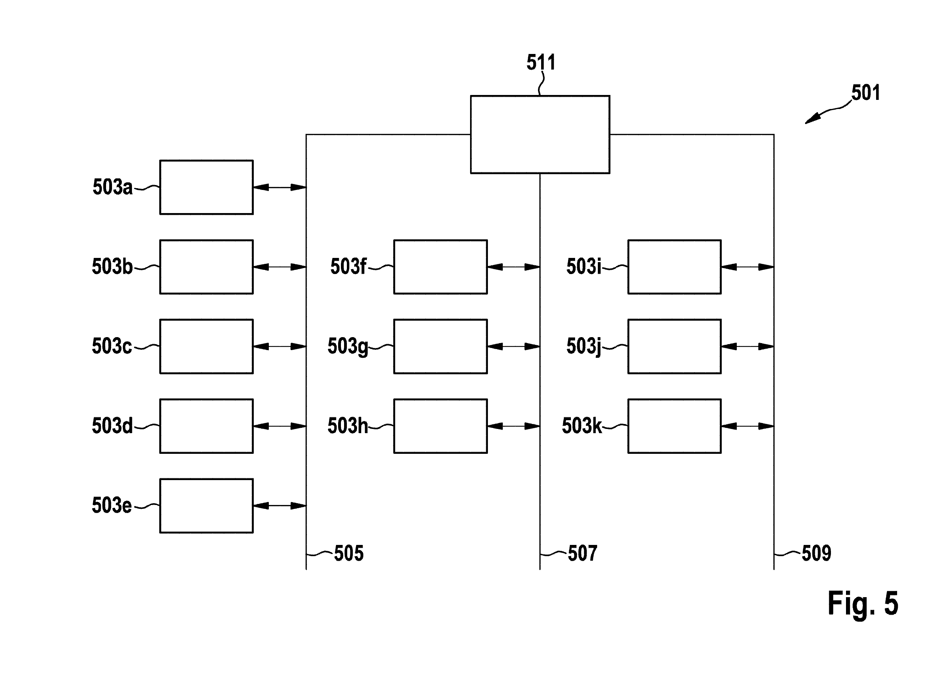

Fig. 5 zeigt eine weitere Diagnosevorrichtung 501 für eine Fahrzeugkomponente (nicht gezeigt) eines Fahrzeugs (nicht gezeigt).

Die Diagnosevorrichtung 501 umfasst mehrere Erfassungseinrichtungen, hier nicht im Detail gezeigt, wobei jeweils eine der Erfassungseinrichtungen in einer Steuerung für eine Fahrzeugkomponente des Fahrzeugs integriert ist. Die Steuerungen für die entsprechenden Fahrzeugkomponenten sind in Fig. 5 mittels der Bezugszeichen 503a bis 503k gekennzeichnet.

Hierbei kennzeichnet das Bezugszeichen 503a eine ESP-Steuerung. Das Bezugszeichen 503b kennzeichnet eine ACC-Steuerung. Das Bezugszeichen 503c kennzeichnet eine Videosteuerung. Das Bezugszeichen 503d kennzeichnet eine Steuerung für eine Dämpferverstellung. Das Bezugszeichen 503f kennzeichnet eine Motorsteuerung. Das Bezugszeichen 503g kennzeichnet eine Getriebesteuerung. Das Bezugszeichen 503i kennzeichnet eine Kommunikationssteuerung. Das Bezugszeichen 503j kennzeichnet eine Navigationssteuerung. In einer nicht gezeigten Ausführungsform können auch mehr oder weniger Steuerungen vorgesehen sein.

Die einzelnen Steuerungen 503a bis 503k sind über Busse verbunden. Hierbei sind die Steuerungen 503a bis 503e mittels eines Fahrwerk-Busses 505 verbunden. Die Steuerungen 503f bis 503h sind über einen Antriebsbus 507 miteinander verbunden. Die Steuerungen 503i bis 503k sind mittels eines Multimedia-Bus 509 verbunden.

Die Busse 505, 507 und 509 sind mit einer zentralen Diagnoseeinrichtung 511 verbunden. Die zentrale Diagnoseeinrichtung 511 nimmt die Störungsmeldungen, also die Substatusnachrichten, der Steuerungen 503a bis 503k entgegen. Aus diesen Substatusnachrichten leitet die zentrale Diagnoseeinrichtung 511 eine technische Gesamtbeurteilung ab und bildet insofern eine entsprechende Statusnachricht. Die Diagnoseeinrichtung 511 kann dann beispielsweise bei einer hier nicht gezeigten zentralen Kommunikationseinrichtung das Absenden beziehungsweise Absetzen der Statusnachricht anfordern.

Der gemäß Fig. 5 beschriebene Aufbau kann auch als eine zentrale Architektur bezeichnet werden, insofern hier die zentrale Diagnoseeinrichtung 511 als zentrale übergeordnete Instanz die Störungsmeldungen der Steuerungen 503a bis 503k entgegennimmt. Im Gegensatz dazu kann in einer nicht gezeigten Ausführungsform eine dezentrale Architektur vorgesehen sein. Das heißt also insbesondere, dass jede Steuerung 503a bis 503k über eine geeignete Kommunikation, beispielsweise einem Datenbus, bei einer Kommunikationssteuerung, beispielsweise der Kommunikationssteuerung 503i, das Absetzen der entsprechenden Substatusnachricht anfordert, wenn es in seinem Zuständigkeitsbereich, also dem Bereich betreffend der Fahrzeugkomponente, welche mittels der entsprechenden Steuerung gesteuert wird, ein bevorstehendes technisches Problem, also beispielsweise eine Funktionseinschränkung oder einen Funktionsausfall, erkennt.

Die zentrale Architekturvariante ermöglicht insbesondere in vorteilhafter Weise, dass zur Beurteilung der Funktionsfähigkeit einer Fahrzeugkomponente Informationen aus mehreren Steuerungen ausgewertet werden können. Das ermöglicht insbesondere eine noch genauere und umfassendere Diagnose der Fahrzeugkomponente.

In einer nicht gezeigten Ausführungsform kann vorgesehen sein, dass die zentrale Diagnoseeinrichtung 511 in einer Gateway-Steuerung integriert ist. Eine solche Gateway-Steuerung ist üblicherweise in einem Kommunikationsnetz, beispielsweise einem Bussystem mit mehreren Datenbussen, hier den Bussen 505, 507 und 509, verbunden und hat somit in vorteilhafter Weise Zugang zu vielen Informationen, insbesondere der einzelnen Steuerungen 503a bis 503k.

## Patentansprüche

1. Diagnoseverfahren für eine Fahrzeugkomponente eines Fahrzeugs, wobei während eines Betriebs des Fahrzeugs ein Betriebsparameter der Fahrzeugkomponente erfasst (101) wird und wobei abhängig von dem erfassten Betriebsparameter eine Statusnachricht entsprechend einem Status der Fahrzeugkomponente an einen fahrzeugexternen Server (303, 405) für eine Auswertung der Statusnachricht gesendet (103) wird, wobei eine auf der Auswertung der Statusnachricht basierende Nachricht an eine Empfangseinrichtung (305) gesendet (105) wird.

2. Diagnoseverfahren nach Anspruch 1, wobei eine Nutzerautorisierungseingabe erfasst wird und wobei abhängig von der erfassten Nutzerautorisierungseingabe die Statusnachricht an den fahrzeugexternen Server gesendet wird.

3. Diagnoseverfahren nach Anspruch 1 oder 2, wobei ein zeitlicher Verlauf des Betriebsparameters erfasst und eine Abweichung des Betriebsparameters von einem Sollbetriebsparameterwert erfasst werden, wobei die Statusnachricht an den fahrzeugexternen Server (303, 405) abhängig von der Abweichung gesendet wird.

4. Diagnoseverfahren nach einem der vorherigen Ansprüche, wobei der Betriebsparameter eine Eingriffsintensität eines Stellers der Fahrzeugkomponente umfasst.

5. Diagnoseverfahren nach einem der vorherigen Ansprüche, wobei der Betriebsparameter und die Statusnachricht an eine zentrale fahrzeuginterne Kommunikationseinrichtung des Fahrzeugs für das Senden des Betriebsparameters und der Statusnachricht an den fahrzeugexternen Server (303, 405) übermittelt werden.

6. Diagnoseverfahren nach einem der vorherigen Ansprüche, wobei ein jeweiliger Betriebsparameter von weiteren unterschiedlichen Fahrzeugkomponenten erfasst wird und abhängig von den erfassten Betriebsparametern jeweils eine Substatusnachricht entsprechend des jeweiligen Status der weiteren Fahrzeugkomponenten an eine zentrale fahrzeuginterne Diagnoseeinrichtung (511) übermittelt wird, welche abhängig von den übermittelten Substatusnachrichten die Statusnachricht an den fahrzeugexternen Server (303, 405) sendet.

7. Diagnoseverfahren nach einem der vorherigen Ansprüche, wobei die Empfangseinrichtung (305) von einer Reparaturanlage umfasst ist, welche abhängig von der Nachricht und abhängig von einer erfassten weiteren Nutzerautorisierungseingabe zu einem vorbestimmten Zeitpunkt in einen Reparaturmodus für eine Reparatur der Fahrzeugkomponente gefahren wird.

8. Diagnosevorrichtung (201, 501) für eine Fahrzeugkomponente eines Fahrzeugs, umfassend eine Erfassungseinrichtung (203) zum Erfassen eines Betriebsparameters der Fahrzeugkomponente und eine Sendeeinrichtung (205) zum Senden einer Statusnachricht entsprechend einem Status der Fahrzeugkomponente an einen fahrzeugexternen Server (303, 405) für eine Auswertung der Statusnachricht, wobei das Senden der Statusnachricht abhängig von dem erfassten Betriebsparameter durchgeführt wird.

9. Diagnosevorrichtung (201, 501) nach Anspruch 8, wobei die Erfassungseinrichtung (203) in einer Steuerung (503a, ..., 503k) der Fahrzeugkomponente integriert ist.

10. Diagnosevorrichtung (201, 501) nach Anspruch 8 oder 9, wobei eine zentrale Diagnoseeinrichtung (511) vorgesehen ist, welche mit der Erfassungseinrichtung (203) mittels eines Bus (505, 507, 509) verbunden ist.

11. Diagnosevorrichtung (201, 501) nach Anspruch 10, wobei die zentrale Diagnoseeinrichtung (511) in einer zentralen Kommunikationseinrichtung umfassend die Sendeeinrichtung (205) integriert ist.

12. Diagnosesystem (301, 401) für eine Fahrzeugkomponente eines Fahrzeugs, umfassend die Diagnosevorrichtung (201, 501) nach einem der Ansprüche 8 oder 11, den fahrzeugexternen Server für eine Auswertung der Statusnachricht und die Empfangseinrichtung (305).

13. Diagnosesystem (301, 401) nach Anspruch 12, wobei die Empfangseinrichtung (305) von einer Reparaturanlage umfasst ist.

14. Computerprogramm, umfassend Programmcode zur Ausführung des Diagnoseverfahrens nach einem der Ansprüche 1 bis 7, wenn das Computerprogramm auf einem Computer ausgeführt wird.
